# EUROPÄISCHE PATENTSCHRIFT

(11) **EP 3 655 128 B1**
(45) Veröffentlichungstag und Bekanntmachung des Hinweises auf die Patenterteilung: **30.08.2023**
(21) Anmeldenummer: 18779585.1
(22) Anmeldetag: 20.09.2018
(51) Int. Cl.: B01D 25/02, B01L 3/00

(54) **FILTRATIONSVORRICHTUNG, VERFAHREN ZUM ZUSAMMENFÜGEN EINER MODULAREN FILTRATIONSVORRICHTUNG SOWIE VERFAHREN ZUR CHARAKTERISIERUNG EINES FILTERMEDIUMS UND/ODER ZU FILTRIERENDEN MEDIUMS**
FILTRATION DEVICE, METHOD OF ASSEMBLING A MODULAR FILTRATION DEVICE, AND METHOD OF CHARACTERIZING A FILTER MEDIA AND/OR MEDIUM TO BE FILTERED
DISPOSITIF DE FILTRATION, PROCÉDÉ D'ASSEMBLAGE D'UN DISPOSITIF DE FILTRATION MODULAIRE, ET PROCÉDÉ PERMETTANT DE CARACTÉRISER UN MILIEU FILTRANT ET/OU UN MILIEU À FILTRER

(30) Priorität: 29.09.2017 DE 102017009147
(43) Veröffentlichungstag der Anmeldung: 27.05.2020
(73) Patentinhaber: Sartorius Stedim Biotech GmbH, 37079 Göttingen (DE)
(72) Erfinder: THOM, Volkmar, 37083 Göttingen (DE); HANSMANN, Björn, 37077 Göttingen (DE); WARNKE, Magnus, 37120 Bovenden (DE); KOSIOL, Peter, 37077 Göttingen (DE)
(74) Vertreter: Novagraaf International SA
(86) Internationale Anmeldenummer: PCT/EP2018/075413
(87) Internationale Veröffentlichungsnummer: WO 2019/063394

(56) Entgegenhaltungen:
- EP-A1- 1 854 542
- EP-B1- 1 854 542
- US-A1- 2006 088 448
- US-A1- 2009 071 834
- US-A1- 2016 023 210

## Beschreibung

Die vorliegende Erfindung betrifft eine Filtrationsvorrichtung, ein Verfahren zum Zusammenfügen einer modularen Filtrationsvorrichtung sowie ein Verfahren zur Charakterisierung eines Filtermediums und/oder zu filtrierenden Mediums. Insbesondere betrifft die Erfindung eine Vorrichtung und ein Verfahren zum prozessnahen Charakterisieren von Filtern und Feedlösungen in "High-Throughput-Screening"-Systemen (HTS-Systeme, Hochdurchsatz-Systeme, "Multi-Well"-Systeme).

High-Throughput-Screening (HTS) oder Hochdurchsatz-Screening ist eine, insbesondere in der Pharmaforschung angewendete, voll- oder zumindest teilautomatisierte Methode, die die Untersuchung einer großen Zahl von Parametern in kürzerer Zeit erlaubt.

Anwendung findet das HTS-Verfahren beispielsweise in der Biopharmazeutischen Industrie zur Analyse von Lösungen mit unterschiedlichen Parametern, wie z.B. pH-Wert, Leitfähigkeit und/oder Additiven, auf deren Filtrationsverhalten in Verbindung mit verschiedenen Filtermedien. Dadurch können Eigenschaften wie Durchflussrate, Verblockungsverhalten (Standzeitkurve), Proteintransmission und Zusammensetzung von Filtraten gemessen bzw. bewertet werden. Darüber hinaus können Einflüsse von Prozessparametern, wie unter anderem der beaufschlagte Druck, die verwendeten Filtertypen und das Maß der Beladung in einem kleinen Maßstab untersucht werden, und im Anschluss auf einen größeren Maßstab übertragen werden.

Ein weiteres Anwendungsfeld des HTS-Verfahrens liegt in der Entwicklung neuer Filtermedien. Dabei kann zeiteffizient das Filtrationsverhalten einer Vielzahl von Filtermedien mit unterschiedlichen Strukturen, Oberflächenbeschaffenheiten und Konfigurationen untersucht und bewertet werden.

DE 2010 011 485 A1 beschreibt eine für das High-Throughput-Screening-Verfahren geeignete Vorrichtung, welche ein Oberteil und ein Unterteil, mit einer Vielzahl von in Verbindung stehenden Löchern ("Wells"), und ein Filtermedium zwischen Oberteil und Unterteil aufweist. Die Löcher des Oberteils werden mit einem zu filtrierenden Medium befüllt. Durch Anlegen eines Unterdrucks an die Löcher des Unterteils durchströmt das zu filtrierende Medium das Filtermedium. Das Filtrat wird in den Löchern der Unterseite gesammelt.

Das Anlegen eines Unterdrucks an den "Wells" der Unterseite kann zu einer erhöhten Verdunstung von Lösungsmitteln an der Oberfläche der dem Unterdruck ausgesetzten Unterseite (Downstreamseite) des Filters führen, was zu lokaler Konzentrationserhöhung von gelösten Stoffen in der Filtrationslösung und zu einer Überschreitung der Löslichkeit von gelösten Stoffen führt. In der Folge kann es zu einer vermehrten Bildung von Ablagerungen und zu einer frühen Verblockung des Filtermediums kommen. Darüber hinaus kann es zu einer Blasenbildung an der Downstreamseite des Filters kommen, wenn oberflächenaktive Stoffe, wie z.B. Surfactants und Proteine, in dem zu filtrierenden Medium enthalten sind. Eine solche Blasenbildung kann Denaturierung und Aggregation von Proteinen induzieren, was ebenfalls zur Bildung von Ablagerungen und zu einer frühen Verblockung des Filtermediums führt.

Ein weiterer Nachteil der in der DE 10 2010 011 485 A1 beschriebenen Vorrichtung und des Verfahrens ist der Umstand, dass keine Messung der Filtrate an den "Wells" der Unterseite möglich ist, ohne den Filtrationsprozess zu unterbrechen.

US 4,948,564 A beschreibt eine Vorrichtung mit einer Vielzahl von übereinander angeordneten und miteinander verbundenen "Wells" und einer dazwischen befindlichen Filtermatte. Durch Anlegen eines Überdrucks an die oberen "Wells", welche das zu filtrierende Medium enthalten, wird dieses durch die Filtermatte in die unteren "Wells" gedrückt. Bei dieser Aufgabe ist es jedoch schwierig, ohne Unterbrechung des Filtrationsprozesses Füllstände der "Wells" zu messen und daraus die Flussraten während des Filtrationsprozesses zu ermitteln.

Weitere Filtersysteme sind in der EP 1 854 542 A1, der US 2009/071834 A1, der US 2006/088448 A1 sowie der US 2016/023210 A1 beschrieben.

Vor diesem Hintergrund ist es eine Aufgabe der vorliegenden Erfindung, eine Vorrichtung und ein Verfahren bereitzustellen, die eine prozessnahe und hochparallelisierte Durchführung von Filtrationen bei gleichzeitigem Messen von Prozessparametern ohne Unterbrechung der Filtration mit der Möglichkeit zur Variation von Filtermedien und Rohmaterialien ermöglichen.

Diese Aufgabe wird durch die Gegenstände der unabhängigen Ansprüche gelöst. Bevorzugte Ausführungsformen sind Gegenstand der abhängigen Ansprüche.

Insbesondere bietet die Erfindung somit eine Filtrationsvorrichtung zur Charakterisierung von Filtermedien und/oder zu filtrierenden Medien. Diese Filtrationsvorrichtung umfasst eine Vielzahl von Filtrationseinheiten, wobei eine Filtrationseinheit jeweils einen ersten Behälter, der dazu ausgebildet ist, ein zu filtrierendes Medium aufzunehmen, einen zweiten Behälter, der dazu ausgebildet ist, ein Filtrat aufzunehmen, wenigstens eine Verbindungsleitung, die den ersten Behälter mit dem zweiten Behälter verbindet, und ein Filtermedium zwischen dem ersten Behälter und dem zweiten Behälter, um das zu filtrierende Medium zu filtrieren, umfasst. Dabei ist der erste Behälter dazu ausgebildet, mit Überdruck beaufschlagt zu werden, und der zweite Behälter ist dazu ausgebildet, bei Umgebungsdruck ein Messinstrument zu empfangen.

Die Vielzahl von Filtrationseinheiten ermöglicht ein parallelisiertes und dadurch hocheffizientes Charakterisieren von verschiedenen bzw. gesonderten zu filtrierenden Medien. Beispielsweise können die ersten Behälter der Vielzahl von Filtrationseinheiten mit unterschiedlichen Lösungen mit unterschiedlichen Parametern (z.B. pH-Wert, Leitfähigkeit und/oder Additiven) befüllt werden, um Messungen insbesondere unter identischen Prozessparametern (z.B. angelegter Druck und/oder Umgebungstemperatur) zu erhalten.

Die beschriebene Filtrationsvorrichtung bietet insbesondere die Möglichkeit, eine Charakterisierung während des Filtrationsprozesses durchzuführen, ohne den Filtrationsprozess zu unterbrechen oder auf sonstige Weise zu beeinflussen. Dies wird durch die besondere Ausgestaltung der Filtrationsvorrichtung, insbesondere des zweiten Behälters der Vielzahl von Filtrationseinheiten erreicht: Der zweite Behälter der Filtrationseinheit, der das Filtrat, also das von dem Filtermedium filtrierte Medium, empfängt, sammelt das Filtrat unter Umgebungsdruck. Diese besondere Ausgestaltung ermöglicht es, dass ein Messinstrument in den zweiten Behälter eingeführt werden kann, das Filtrat kontinuierlich und/oder in regelmäßigen, zeitlichen Abständen, insbesondere nahezu kontinuierlich, erfassen und beispielsweise den Füllstand des Filtrats in dem zweiten Behälter messen kann.

Ebenfalls ermöglicht die Vielzahl von Filtrationseinheiten in der Filtrationsvorrichtung vorteilhaft ein paralleles Charakterisieren von verschiedenen Filtermedien und deren Auswirkung auf den Filtrationsprozess eines einzelnen, bestimmten Mediums oder auch einer Vielzahl von unterschiedlichen Medien.

Beispielsweise können die Filtermedien zwischen den jeweils ersten und zweiten Behältern der Filtrationseinheiten unterschiedliche Strukturen oder Oberflächenbeschaffenheiten aufweisen. Darüber hinaus können verschiedene Typen von Filtermedien eingesetzt werden, die mittels verschiedener Wirkungsmechanismen funktionieren. Hierzu zählen neben auf Größenausschluss basierende Filtermedien (z.B. Mikro-, Virus- und/oder Ultrafiltrationsmembranen, Tiefenfilter, Filter aus gesinterten Materialien und/oder Fasern) auch auf Wechselwirkungen basierende Filtermedien (z.B. Membranabsorber, Monolithen, chromatographische Gele).

Gemäss der Erfindung verläuft die wenigstens eine Verbindungsleitung derart, dass sich die Flussrichtung eines von einem ersten Behälter in einen zweiten Behälter fließenden Mediums ändert. Ein solcher Verlauf der Verbindungsleitung, die den ersten Behälter mit dem zweiten Behälter einer Filtrationseinheit verbindet, ermöglicht beispielsweise ein nebeneinander Anordnen der ersten und zweiten Behälter. In einem konkreten Fall fließt das Medium bevorzugt zunächst im Wesentlichen vertikal aus dem ersten Behälter, im Anschluss daran im Wesentlichen waagerecht in Richtung des zweiten Behälters und abschließend im Wesentlichen vertikal in den zweiten Behälter hinein.

In einer bevorzugten Ausführungsform weist jede Filtrationseinheit der Filtrationsvorrichtung eine Öffnung in einem Abschlußbereich bzw. oberen Bereich auf, durch die ein Messinstrument zumindest teilweise in den zweiten Behälter der Filtrationseinheiten eingeführt werden und mit dem darin befindlichen Filtrat selektiv in Kontakt treten kann. Durch diese besondere Ausgestaltung kann ein Messinstrument auf einfache und schnelle Weise in die zweiten Behälter eingeführt bzw. aus diesen wieder herausgeführt werden. Dies ermöglicht ein effizientes, sequentielles Erfassen der Filtrate in einer Vielzahl von zweiten Behältern um auch mit einem einzigen Messinstrument eine ausreichend hohe Anzahl an Füllstandsmessungen in allen Filtrationseinheiten zu erhalten.

Das Messinstrument kann beispielsweise eine Pipettenspitze sein, welche zwei Elektroden besitzt, um die Leitfähigkeit eines Gases oder einer Flüssigkeit messen zu können. Tritt die Pipettenspitze in Kontakt mit dem Filtrat in dem zweiten Behälter kann eine Änderung der gemessenen Leitfähigkeit detektiert und die Position der Pipettenspitze aufgezeichnet werden.

In einer weiteren bevorzugten Ausführungsform ist die Filtrationsvorrichtung modular aufgebaut und weist zumindest ein erstes Modul und ein zweites Modul auf, wobei das erste Modul den ersten Behälter und den zweiten Behälter einer Vielzahl von Filtrationseinheiten umfasst. Weiter bevorzugt umfasst das zweite Modul die wenigstens eine Verbindungsleitung einer Vielzahl von Filtrationseinheiten. Eine solche Filtrationsvorrichtung bietet den Vorteil einer vereinfachten Vorbereitung und Assemblierung der Filtrationsvorrichtung. Dabei ist das Filtermedium einer Filtrationseinheit vorzugsweise zumindest teilweise zwischen dem ersten Modul und dem zweiten Modul der Filtrationsvorrichtung angebracht: Das erste Modul und das zweite Modul stehen über jeweils zumindest eine Fläche in Kontakt. Diese Flächen weisen jeweils zumindest Teilbereiche der ersten und zweiten Behälter bzw. zumindest Teilbereiche der wenigstens einen Verbindungsleitung der entsprechenden Verbindungsleitung auf, sodass das Medium auf dem Weg von dem ersten Behälter in den zweiten Behälter den Übergangsbereich zwischen erstem Modul und zweitem Modul, also die besagten in Kontakt stehenden Flächen des ersten Moduls und zweiten Moduls, passiert bzw. durchströmt.

Außerdem erlaubt eine solche, vorteilhafte Ausgestaltung der Filtrationsvorrichtung ein einfaches Anbringen, Aufstocken und/oder Austauschen einer Vielzahl von gleichen oder unterschiedlichen Filtermedien: Das zu filtrierende Medium fließt aus dem in dem ersten Modul befindlichen ersten Behälter über die im zweiten Modul befindliche, wenigstens eine Verbindungsleitung in den im ersten Modul befindlichen zweiten Behälter der Filtrationsvorrichtung. In der Folge kann das Filtermedium zwischen dem ersten Modul und dem zweiten Modul derart platziert bzw. angeordnet werden, sodass das zu filtrierende Medium beim Überführen vom ersten Behälter in den zweiten Behälter das Filtermedium durchströmt und auf diese Weise durch das Filtermedium filtriert wird.

Das Filtermedium kann beispielsweise ein oder mehrere Membranblätter umfassen. Das Filtermedium kann darüber hinaus derart ausgestaltet sein, dass sich dieses zwischen einer Vielzahl von ersten und zweiten Behältern einer Vielzahl von Filtrationseinheiten befindet. In anderen Worten, eine Vielzahl von zu filtrierenden Medien einer Vielzahl von Filtrationseinheiten durchströmen auf dem Weg von den jeweiligen ersten Behältern in die jeweiligen zweiten Behälter dasselbe Filtermedium. Dadurch reduziert sich der Aufwand der Vorbereitung der Filtrationsvorrichtung, da lediglich eine reduzierte Anzahl von Filtermedien platziert bzw. angeordnet werden müssen.

Ebenso ermöglicht die besondere Ausgestaltung der Filtrationsvorrichtung die Verwendung kleiner anzuströmender Filterflächen, sodass Versuche im Kleinstmaßstab durchgeführt werden können. Weiterhin tritt ein in den ersten Behälter eingefülltes, zu filtrierendes Medium direkt mit dem Filtermedium in Kontakt, da das Filtermedium zumindest einen Teilbereich des Bodens des ersten Behälters darstellt. Auf diese Weise entsteht kein Totvolumen beim Befüllen mit dem zu filtrierenden Medium auf der Upstreamseite des Filtermediums. Bei typischen small scale Filtrationsvorrichtungen (z.B. Kapsulen) hingegen ist, im Fall von leeren Filtrationsvorrichtungen, ein Entlüften erforderlich oder es entstehen störende Verdünnungseffekte zu Beginn einer Filtration, im Fall von mit Puffer oder Wasser gefüllten Filtrationsvorrichtungen.

In einer weiteren bevorzugten Ausführungsform umfasst die Filtrationsvorrichtung zusätzlich ein poröses Trägermaterial, welches zur mechanischen Unterstützung des Filtermediums dient. Bevorzugt befindet sich das poröse Trägermaterial in einem Bereich des zweiten Moduls, welcher sich in Bezug auf die Flussrichtung des Mediums nach dem Filtermedium, also im Anschluss an dessen "Downstreamseite", befindet. Das poröse Trägermaterial stützt somit das Filtermedium, sodass dieses den aufgrund der Druckbeaufschlagung hervorgerufenen Kräften besser standhalten kann. Folglich kann das poröse Trägermaterial von dem filtrierten Medium, dem Filtrat, auf dessen Weg in den zweiten Behälter zumindest teilweise durchströmt werden.

In einer besonders bevorzugten Ausführungsform der Filtrationsvorrichtung umfasst das erste Modul eine Behälterplatte mit dem ersten Behälter und dem zweiten Behälter von einer Vielzahl von Filtrationseinheiten, sowie ein oder mehrere Öffnungen, wobei die Öffnungen dazu ausgebildet sind, die ersten Behälter mit Überdruck zu beaufschlagen und/oder Zugang eines Messinstruments zu den zweiten Behältern zu ermöglichen. Des Weiteren umfasst das zweite Modul der Filtrationsvorrichtung eine Verbindungsleitungsplatte mit einer Vielzahl von Verbindungsleitungen, wobei wenigstens ein Filtermedium zumindest teilweise zwischen der Behälterplatte des ersten Moduls und der Verbindungsleitungsplatte des zweiten Moduls der Filtrationsvorrichtung angebracht ist.

In dieser besonders bevorzugten Ausführungsform der Filtrationsvorrichtung weist jede der Filtrationseinheiten insbesondere zumindest zwei Arten von Öffnungen auf: Wenigstens eine Öffnung, die dazu ausgebildet ist, den ersten Behälter mit Überdruck zu beaufschlagen, und wenigstens eine Öffnung, die dazu ausgebildet ist, Zugang eines Messinstruments zu dem zweiten Behälter zu ermöglichen.

Weiter bevorzugt kann das erste Modul an sich modular aufgebaut sein. Insbesondere bevorzugt umfasst ein solches modulares erstes Modul eine Behälterplatte mit den ersten und zweiten Behältern, sowie eine Abdeckplatte mit den Öffnung(en).

Vorzugsweise ist das zweite Modul der Filtrationsvorrichtung modular aufgebaut und umfasst zusätzlich zu der Verbindungsleitungsplatte eine Abschlussplatte, die mit der Verbindungsleitungsplatte in Kontakt steht. Die Abschlussplatte kann dabei ebenfalls ein oder mehrere Segmente der Verbindungsleitungen umfassen. Eine solche Abschlussplatte dient als Basis der Filtrationsvorrichtung und kann darüber hinaus Bohrungen umfassen, die dazu ausgebildet sind, Führungselemente zu empfangen. Entsprechende Bohrungen in zumindest einem Teil der Einzelteile der Filtrationsvorrichtung ermöglichen vorteilhaft ein passgenaues Anordnen der Einzelteile der Filtrationsvorrichtung. Dabei können die Führungselemente Gewindestangen umfassen, um die Einzelteile der Filtrationsvorrichtung mit Muttern zu fixieren und zu pressen, damit ein sauberer Schluss zwischen den Einzelteilen der Filtrationsvorrichtung sichergestellt wird.

In einem weiteren Aspekt stellt die Erfindung ein Verfahren zum Zusammenfügen einer modularen Filtrationsvorrichtung mit einer Vielzahl von Filtrationseinheiten, insbesondere einer Filtrationsvorrichtung nach einem Aspekt der vorliegenden Erfindung oder eine Ausführungsform hiervon, bereit. Dieses Verfahren umfasst die Schritte:
Anbringen wenigstens eines Filtermediums zum Filtrieren eines zu filtrierenden Mediums an eine Verbindungsleitungsplatte;
Anordnen einer Behälterplatte an der Verbindungsleitungsplatte, wobei die Behälterplatte eine Vielzahl von ersten und zweiten Behältern umfasst, wobei jeweils ein erster Behälter und ein zweiter Behälter einer Filtrationseinheit zugehörig sind, wobei der erste Behälter einer Filtrationseinheit dazu ausgebildet ist, ein zu filtrierendes Medium aufzunehmen, und der zweite Behälter einer Filtrationseinheit dazu ausgebildet ist, ein Filtrat aufzunehmen, sodass
   sich das wenigstens eine Filtermedium zumindest teilweise zwischen der Verbindungsleitungsplatte und der Behälterplatte befindet; und
   die jeweiligen ersten und zweiten Behälter einer Filtrationseinheit durch ein oder mehrere Verbindungsleitungen der Verbindungsplatte verbunden sind,
   wobei der erste Behälter einer Filtrationseinheit ausgestaltet ist, um durch eine erste Öffnung mit Überdruck beaufschlagt zu werden, und
   wobei der zweite Behälter einer Filtrationseinheit eine zweite Öffnung aufweist, durch die ein Messinstrument bei Umgebungsdruck in dem zweiten Behälter empfangen werden kann.

Das beschriebene Verfahren ermöglicht aufgrund der Modularität der Filtrationsvorrichtung ein schrittweises Zusammenfügen der Filtrationsvorrichtung. Dabei wird zunächst für jede Filtrationseinheit ein Filtermedium an der Verbindungsleitungsplatte der Filtrationsvorrichtung angebracht, sodass das Filtermedium von einem zu filtrierenden Medium auf dem Weg vom ersten Behälter zum zweiten Behälter von diesem filtriert wird. Dabei kann sich ein Filtermedium auch über mehrere Filtrationseinheiten erstrecken. Bevorzugt umfasst ein Filtermedium ein oder mehrere Membranblätter, die auf die Verbindungsleitungsplatte aufgelegt werden können. Zusätzlich kann zuvor ein poröses Trägermaterial in einem Bereich der Verbindungsleitungsplatte angebracht werden, um das Filtermedium zu stützen. Bevorzugt wird das Filtermedium vor oder nach dem Anbringen benetzt. Denkbar ist ebenfalls das Anordnen von zwei oder mehreren Filtermedien innerhalb einer Filtrationseinheit. Bevorzugt werden der Eingang und der Ausgang der jeweiligen Filtrationseinheit nach dem Auflegen der Filtermedien mittels üblicher Abdichtmittel, wie z.B. O-Ringen, gegen die anderen Filtrationseinheiten abgedichtet.

In einer bevorzugten Ausführungsform des Verfahrens wird eine Abdeckplatte an die Behälterplatte des modularen ersten Moduls angeordnet, wobei die Abdeckplatte die ersten und zweiten Öffnungen der Vielzahl von Filtrationseinheiten umfasst.

Weiter bevorzugt findet ein Befüllen der Verbindungsleitungen der Verbindungsleitungsplatte mit einem Fluid vor dem Anbringen des wenigstens einen Filtermediums an die Verbindungsplatte. Durch ein bevorzugt blasenfreies Befüllen der Verbindungsleitungen der Verbindungsleitungsplatte mit einem Fluid, beispielsweise durch Hineinpipettieren, werden unerwünschte Effekte aufgrund von Lufteinschlüssen in den Verbindungsleitungen verhindert.

In einer bevorzugten Ausführungsform umfasst das Verfahren das Befüllen der ersten Behälter einer Vielzahl von Filtrationseinheiten mit einem zu filtrierenden Medium. Dies geschieht nach dem Anordnen der Behälterplatte an die Verbindungsleitungsplatte. Weiter bevorzugt findet ein Befüllen der zweiten Behälter mit geringer Menge Filtrat statt. Dies hat den Effekt, dass bei einer initialen Füllstandsmessung der zweiten Behälter das Messinstrument nicht gegen die Behälterwand stößt und beschädigt wird.

Weiter bevorzugt ist das zweite Modul der Filtrationsvorrichtung modular aufgebaut, sodass das Verfahren als ersten Schritt das Anbringen einer Abschlussplatte umfasst. Die Abschlussplatte ist Bestandteil des modularen zweiten Moduls und dient als Basis für die weiteren Einzelteile der modularen Filtrationsvorrichtung. Im Weiteren wird die Verbindungsleitungsplatte an der Abschlussplatte angebracht. Darüber hinaus können Führungselemente an der Abschlussplatte angebracht werden, mithilfe derer die Einzelteile der Filtrationsvorrichtung abschließend fixiert und/oder gepresst werden.

In einem weiteren Aspekt bietet die Erfindung ein Verfahren zur Charakterisierung eines Filtermediums und/oder zu filtrierenden Mediums umfassend die Schritte:
Anordnen einer Filtrationsvorrichtung mit einer Vielzahl von Filtrationseinheiten an einem Pipettierroboter, wobei eine Filtrationseinheit jeweils umfasst:
   einen ersten Behälter zur Aufnahme eines zu filtrierenden Mediums, einen zweiten Behälter zur Aufnahme eines Filtrats, wenigstens eine Verbindungsleitung, die den ersten Behälter mit dem zweiten Behälter verbindet, und ein Filtermedium zwischen dem ersten Behälter und dem zweiten Behälter, um das zu filtrierende Medium zu filtrieren;
Beaufschlagen von zumindest einem Teil der ersten Behälter einer Vielzahl von Filtrationseinheiten mit Überdruck, um jeweils das zu filtrierende Medium durch das Filtermedium zu filtrieren und in den entsprechenden zweiten Behälter zu überführen;
Erfassen der Filtrate unter Umgebungsdruck in zumindest einem Teil der zweiten Behälter mittels eines eingeführten Messinstruments
vorzugsweise während dem Beaufschlagen von zumindest ein Teil der ersten Behälter (3) mit Überdruck.

Dabei kann während des Filtrationsprozesses neben dem Erfassen der Füllstände auch Proben des Filtrats entnommen werden. Dies kann beispielsweise durch die Pipettierfunktion einer als Messinstrument dienenden Pipettenspitze erfolgen. Die Probe wird beispielsweise in eine Mikrotiterplatte oder ein anderes Gefäß transferiert, sodass weitere, unter Anderem automatisierte, analytische Untersuchungen der Probenzusammensetzung durchgeführt werden können. Weiterhin kann durch fortlaufende Probenentnahme das Filtrat fraktioniert aufgefangen werden, sodass durch Untersuchung der jeweiligen Proben eine Veränderung des Filtrats mit fortschreitender Prozessdauer ermittelt werden kann. Hierzu zählt beispielsweise die Proteintransmission, die sich aufgrund von Verblockung des Filtermediums ändern kann. Ebenso können Durchbruchkurven, wie sie zur Charakterisierung von chromatographischen Filtermedien üblich sind, ermittelt werden. Um die Entnahme repräsentativer Proben zu ermöglichen, ist es vorteilhaft, das Filtrat vor der Probenentnahme im zweiten Behälter zu homogenisieren. Eine Homogenisierung des Filtrats kann beispielsweise durch Auf- und Abpipettieren unter Verwendung der Pipettierfunktion einer Pipettenspitze und/oder durch Positionieren der Filtrationsvorrichtung auf einem mechanischen Schüttler innerhalb des Roboters erfolgen.

In einer bevorzugten Ausführungsform umfasst das Verfahren das Erfassen der initialen Füllstände der Filtrate in zumindest einem Teil der zweiten Behälter, nach Anordnen der Filtrationsvorrichtung an einem Pipettierroboter und vor Beaufschlagen von zumindest einem Teil der ersten Behälter einer Vielzahl von Filtrationseinheiten mit Überdruck.

Zusätzlich kann der angelegte Druck auch durch eine elektronische Steuerung bzw. Regelung kontrolliert werden, sodass insbesondere spezifische Druckprofile abgefahren werden können. Die Filtrationsvorrichtung ist für den Betrieb unter einem weiten Druckbereich von etwa 0,01 - etwa 20 bar, bevorzugt von etwa 0,1 - etwa 5 bar, weiter bevorzugt von etwa 0,9 - etwa 2,1 bar, geeignet. Zur Erzeugung eines Überdrucks können alternativ zu komprimierter Luft auch Schutzgase (z.B. Stickstoffe, Edelgase) verwendet werden, um eine Veränderung der zu filtrierenden Medien, z.B. aufgrund von Oxidation, zu verhindern.

Weitere Details insbesondere zu bevorzugten Ausführungsformen und Implementierungen der Erfindung werden nachfolgend unter Bezugnahme auf die beigefügten Zeichnungen beispielhaft erläutert. Dabei zeigen:
- Fig. 1: eine Filtrationsvorrichtung gemäß einer Ausführungsform der Erfindung;
- Fig. 2: einen Querschnitt durch eine Filtrationseinheit einer Filtrationsvorrichtung gemäß einer Ausführungsform der Erfindung;
- Fig. 3: einen Querschnitt durch eine Filtrationseinheit einer modularen Filtrationsvorrichtung gemäß einer Ausführungsform der Erfindung;
- Fig. 4a: eine Verbindungsleitungsplatte einer modularen Filtrationsvorrichtung gemäß einer Ausführungsform der Erfindung;
- Fig. 4b: einen Querschnitt eines Teils der Verbindungsleitungsplatte aus Figur 4a;
- Fig. 4c: einen Querschnitt bevorzugter Ausführungsformen des zweiten Moduls der Filtrationsvorrichtung umfassend eine Verbindungsleitungsplatte und eine Abschlussplatte;
- Fig. 4d: die Verbindungsleitungsplatte aus Figur 4a mit angebrachten bzw. angeordneten Filtermedien;
- Fig. 5: eine Behälterplatte einer modularen Filtrationsvorrichtung gemäß einer Ausführungsform der Erfindung;
- Fig. 6: eine modulare Filtrationsvorrichtung gemäß einer besonders bevorzugten Ausführungsform der Erfindung.

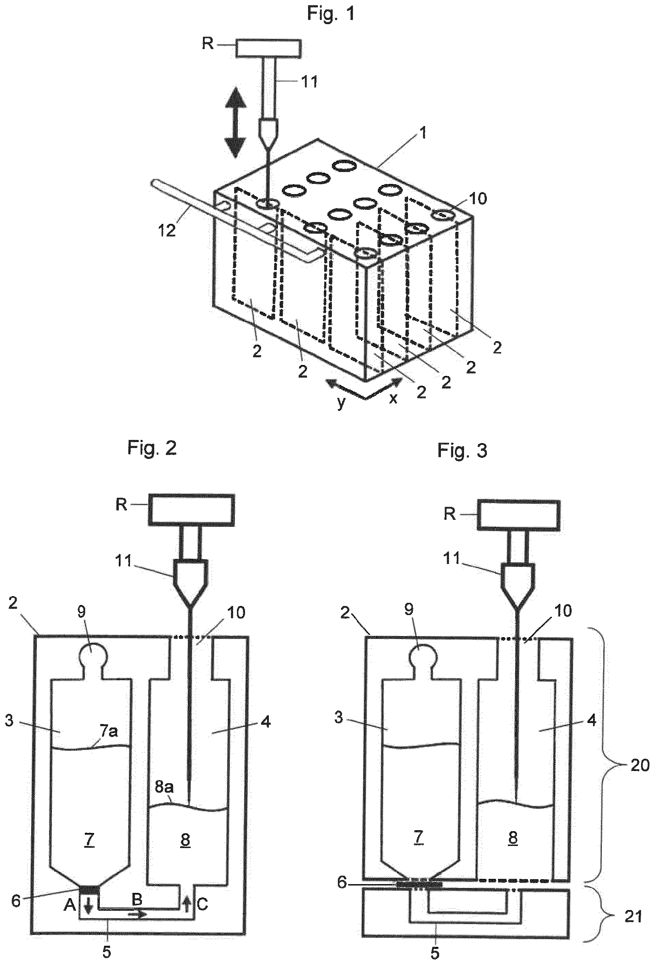

**Figur 1** zeigt eine Filtrationsvorrichtung 1 gemäß einer Ausführungsform der Erfindung mit einer Vielzahl von Filtrationseinheiten 2. Die Filtrationseinheiten 2 sind innerhalb der Filtrationsvorrichtung 1 vorzugsweise in einem Raster bzw. einer Matrix mit im Wesentlichen regelmäßigen Abständen angeordnet. In der dargestellten Filtrationsvorrichtung 1 sind die Filtrationseinheiten 2 derart angeordnet, dass vier Filtrationseinheiten 2 in einer ersten Richtung (z.B. x-Richtung) angeordnet sind und drei Filtrationseinheiten 2 in einer zweiten, zur ersten Richtung im Wesentlichen senkrecht verlaufenden Richtung (z.B. y-Richtung) angeordnet sind. Die jeweils ersten Behälter 3 der Filtrationseinheiten 2 sind über die ersten Öffnungen 9 (vgl. Fig. 2) an eine Überdruckleitung angeschlossen, durch die sie mit Überdruck beaufschlagt werden können. In dem vorliegenden Beispiel sind die ersten Behälter 3 der jeweils vier in einer ersten Richtung (z.B. x-Richtung) angeordneten Filtrationseinheiten 2 über die jeweiligen ersten Öffnungen 9 miteinander verbunden. Die Druckbeaufschlagung der jeweils verbundenen ersten Behälter 3 der Filtrationseinheiten 2 erfolgt über dieselbe Druckbeaufschlagungs- bzw. Überdruckleitung 12, sodass die ersten Behälter 3 der Vielzahl von Filtrationseinheiten 2 mit im Wesentlichen identischem Druck beaufschlagt werden. Alternativ können kleinere Gruppen von Filtrationseinheiten 2 an dieselbe Überdruckleitung 12 angeschlossen werden, beispielsweise eine Vielzahl von in einer ersten Richtung (z.B. x-Richtung) angeordneten und über deren erste Öffnungen 9 verbundenen Filtrationseinheiten 2, oder auch jede Filtrationseinheit 2 an eine eigene Überdruckleitung 12 angeschlossen werden, um eine individuelle Druckbeaufschlagung zu erreichen bzw. ermöglichen. Denkbar ist ebenfalls eine Anordnung von Druckeinstelleinrichtungen (nicht gezeigt), die eine Einstellung des Drucks für einzelne oder Gruppen von Filtrationseinheiten 2 ermöglichen.

Das Messinstrument 11 kann durch die zweiten Öffnungen 10 im oberen Bereich der Filtrationsvorrichtung 1 von den zweiten Behältern 4 der Filtrationseinheiten 2 empfangen werden. Hierbei wird das Messinstrument 11 bei Umgebungsdruck bzw. Atmosphärendruck in den zweiten Behälter 4 zumindest teilweise eingeführt, wobei der Druckausgleich zwischen Außendruck und zweiten Behälter 4 insbesondere über die Öffnung 9 erfolgt. Als Messinstrument 11 sind insbesondere ein oder mehrere Pipettenspitzen geeignet, welche durch die zweite Öffnung 10 zumindest teilweise in den zweiten Behälter 4 einer Filtrationseinheit eingeführt werden. Eine solche Pipettenspitze 11 besitzt an oder in der Nähe deren Spitze zumindest zwei Elektroden, um die Leitfähigkeit einer Flüssigkeit oder eines Gases messen zu können. Tritt die Pipettenspitze 11 in Kontakt mit dem im zweiten Behälter 4 befindlichen Filtrat 8 wird eine Änderung der gemessenen Leitfähigkeit detektiert und die Position der Pipettenspitze 11 aufgezeichnet. Dieser Vorgang wird kontinuierlich und/oder in regelmäßigen, zeitlichen Abständen wiederholt, sodass eine (insbesondere nahezu kontinuierliche) Füllstandsmessung der Filtrate 8 in dem/den zweiten Behälter(n) 4 durchgeführt werden kann.

Auf diese Weise liegt für jede Filtrationseinheit 2 ein eigener Datensatz über die Füllstände vor, sodass individuelle Analysen beispielsweise bezüglich Durchflussraten und/oder Standzeit für jede einzelne Filtrationseinheit 2 erstellt werden kann.

**Figur 2** zeigt einen Querschnitt durch eine Filtrationseinheit 2 einer Filtrationsvorrichtung 1 gemäß einer Ausführungsform der Erfindung. Jede der Vielzahl von Filtrationseinheiten 2 der Filtrationsvorrichtung 1 umfasst einen ersten Behälter 3, einen zweiten Behälter 4, wenigstens eine Verbindungsleitung 5, die den ersten Behälter mit dem zweiten Behälter verbindet und ein Filtermedium 6 zwischen dem ersten Behälter und dem zweiten Behälter. Der erste Behälter 3 der Filtrationseinheit 2 ist dazu ausgebildet, ein zu filtrierendes Medium 7 aufzunehmen und, beispielsweise durch Einleiten eines Überdruckgases über eine erste Öffnung 9, mit Überdruck beaufschlagt zu werden. Der eingeleitete Überdruck wirkt an der Oberfläche 7a auf das zu filtrierenden Medium 7 ein. Durch das Beaufschlagen des ersten Behälters 3 mit Überdruck wird das zu filtrierende Medium 7 über die wenigstens eine Verbindungsleitung 5 in den zweiten Behälter 4 überführt. Dabei passiert das zu filtrierende Medium 4 das Filtermedium 6, das sich zwischen erstem und zweitem Behälter 3, 4 befindet.

Die zu filtrierenden Medien sind insbesondere Pufferlösungen und/oder Proteinlösungen. Es können verschiedene Filtermedien 6 verwendet werden wie z.B. Mikrofilter, Virusfilter, Ultrafilter und/oder Membranabsorber. Besonders bevorzugt werden ein- oder mehrlagige Filter verwendet. Diese können aus unterschiedlichen Materialien hergestellt sein und/oder verschiedene Dicken, Durchlässigkeitsparameter und/oder Porengrößen besitzen. Insbesondere können Filtermembranen bzw. Filterblätter (zumindest bereichsweise) mehrfach übereinander gelegt werden.

In der in Figur 2 dargestellten, erfindungsgeemässen Ausführungsform verändert sich die Flussrichtung A, B, C des durch die Verbindungsleitung fließende Mediums, bevor es in den zweiten Behälter 4 gelangt, der dazu ausgebildet ist, das Filtrat 8 aufzunehmen. In dem vorliegenden Fall sind die ersten und zweiten Behälter 3, 4 nebeneinander bzw. angrenzend angeordnet. Das Filtermedium 6 befindet sich unterhalb des ersten Behälters 3. Diese Anordnung hat den Vorteil, dass kein Totvolumen im zweiten Behälter 4 vorhanden ist, sodass das gesamte zu filtrierende Medium 7 filtriert werden kann. Das zu filtrierende Medium 7 fließt folglich zunächst im Wesentlichen vertikal nach unten aus dem ersten Behälter 3, passiert das Filtermedium 6 (Pfeil A) und tritt als Filtrat 8 in die Verbindungsleitung 5 ein. Diese leitet das Filtrat 8 in den zweiten Behälter 4, wodurch die Flussrichtung des Filtrats 8 als nächstes im Wesentlichen waagerecht (Pfeil B) ist, bevor das Filtrat 8 schlussendlich im Wesentlichen vertikal nach oben (Pfeil C) in den zweiten Behälter 4 fließt und dort nach und nach gesammelt wird.

In der dargestellten Ausführungsform wird in dem ersten Behälter 3 der Filtrationseinheit 2 ein Überdruck mittels Einleiten eines Fluids (z.B. eines Gases) über eine erste Öffnung 9 (insbesondere im oder Nahe dem oberen Bereich der Filtrationsvorrichtung 1) erzeugt. Der vorhandene Überdruck drückt das zu filtrierende Medium 7 durch das Filtermedium 6 und über die Verbindungsleitung 5 in den zweiten Behälter 4. Der zweite Behälter 4 sammelt das Filtrat 8 unter Atmosphärendruck, d.h. an der Oberfläche 8a des Filtrats 8 liegt Atmosphärendruck an. Der zweite Behälter 4 ist weiter dazu ausgebildet, über eine zweite Öffnung 10 ein Messinstrument 11, im vorliegenden Beispiel eine Pipettenspitze zu empfangen.

Da der zweite Behälter 4 unter Umgebungsdruck steht und eine Öffnung 10 aufweist, können während der Filtration beliebig viele Messungen durchgeführt werden, ohne den Filtrationsvorgang unterbrechen zu müssen oder auf sonstige Weise zu beeinflussen.

**Figur 3** zeigt eine weitere Ausführungsform der Erfindung, wobei die Filtrationsvorrichtung 1 modular aufgebaut ist. Das erste Modul 20 der Filtrationsvorrichtung 1 umfasst die ersten und zweiten Behälter 3, 4 einer Vielzahl von Filtrationseinheiten 2. Das zweite Modul 21 der Filtrationsvorrichtung 1 umfasst die Verbindungsleitungen 5 einer Vielzahl von Filtrationseinheiten 2. Die Filtermedien 6 befinden sich zwischen dem ersten Modul 20 und dem zweiten Modul 21 der Filtrationsvorrichtung 1. Bei dieser Ausführungsform werden bevorzugt Filtermembranen bzw. Filterblätter als Filtermedium 6 verwendet, da diese nur eine geringe Höhe aufweisen.

Die Verbindungsleitungen 5, Filtermedien 6 und erste und zweite Behälter 3, 4 einer jeden Filtrationseinheit 2 sind derart angeordnet, dass durch in Kontakt bringen der Kontaktflächen des ersten und zweiten Moduls 20, 21 eine im Wesentlichen geschlossene und dichte Fluidverbindung zwischen erstem Behälter 3 und zweitem Behälter 4 entsteht.

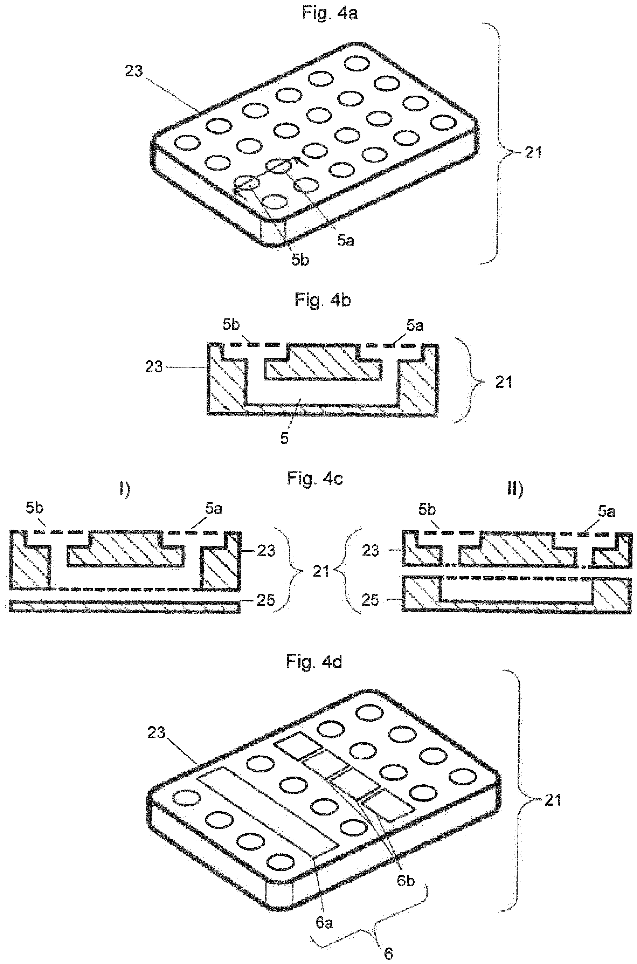

**Figur 4a** zeigt eine Verbindungsleitungsplatte 23 gemäß einer Ausführungsform der Erfindung. Die Verbindungsleitungsplatte 23 ist Bestandteil des zweiten Moduls 21 der Filtrationsvorrichtung 1. Die Verbindungsleitungsplatte 23 umfasst die Verbindungsleitungen 5 einer Vielzahl von Filtrationseinheiten 2. Die dargestellte Verbindungsleitungsplatte 23 kann beispielsweise mit dem Laser-Sinter-Verfahren hergestellt werden, wodurch auch komplexe und von außen nicht zugängliche Strukturen hergestellt werden können. In Fig. 4a sind lediglich die paarweise angeordneten Ein- bzw. Ausgänge der Verbindungsleitungen 5a, 5b dargestellt, wobei diese einen unterschiedlichen Durchmesser aufweisen können. Besonders bevorzugt weist der Eingang 5a einen größeren Durchmesser als die Verbindungsleitung 5 auf.

**Figur 4b** stellt einen Querschnitt eines Teilbereichs der Verbindungsleitungsplatte 23 aus Figur 4a und eine darin befindliche Verbindungsleitung 5 einer Filtrationseinheit 2 dar.

**Figur 4c** zeigt alternative Ausführungsformen des zweiten Moduls 21 einer modularen Filtrationsvorrichtung 1, wobei das zweite Modul 21 an sich modular ausgebildet ist und zusätzlich zur Verbindungsleitungsplatte 23 eine Abschlussplatte 25 aufweist. Diese befindet sich auf der zu den Ein- und Ausgängen 5a, 5b gegenüberliegen Seite der Verbindungsleitungsplatte 23. Bei Vorhandensein einer solchen Abschlussplatte 25 kann der Fertigungsaufwand der Verbindungsleitungsplatte 23 erheblich reduziert werden, da die Verbindungsleitungen 5 im konventionellen Verfahren mit Bohren und/oder Fräsen hergestellt werden können. Dabei kann ein Teil der Verbindungsleitungen 5, insbesondere der waagerechte Abschnitt, von der Abschlussplatte umfasst sein, sodass die Verbindungsleitungsplatte 23 lediglich vertikale Bohrungen aufweist (Fig. 4c-II).

**Figur 4d** zeigt die Verbindungsleitungsplatte 23 aus Figur 4a mit zusätzlich angebrachten Filtermedien 6. Je nach Charakterisierungsverfahren kann sich ein Filtermedium 6a über zwei oder mehr Filtrationseinheiten 2 erstrecken, und/oder jede Filtrationseinheit 2 kann ein eigenes Filtermedium 6b aufweisen. Die Verwendung von einem Filtermedium 6a für eine Vielzahl von Filtrationseinheiten 2 ist insbesondere vorteilhaft bei einer Charakterisierung von verschiedenen zu filtrierenden Medien 7 unter Verwendung des identischen Filtermediums 6, da so der Aufwand bei der Vorbereitung der Filtrationsvorrichtung 1 erheblich reduziert werden kann. Im Gegensatz dazu eignet sich das Anbringen verschiedener (einzelner) Filtermedien 6b insbesondere zur Charakterisierung verschiedener Filtermedien 6 in Verbindung mit unterschiedlichen oder auch identischen zu filtrierenden Medien 7 und/oder verschiedenen beaufschlagten Drücken.

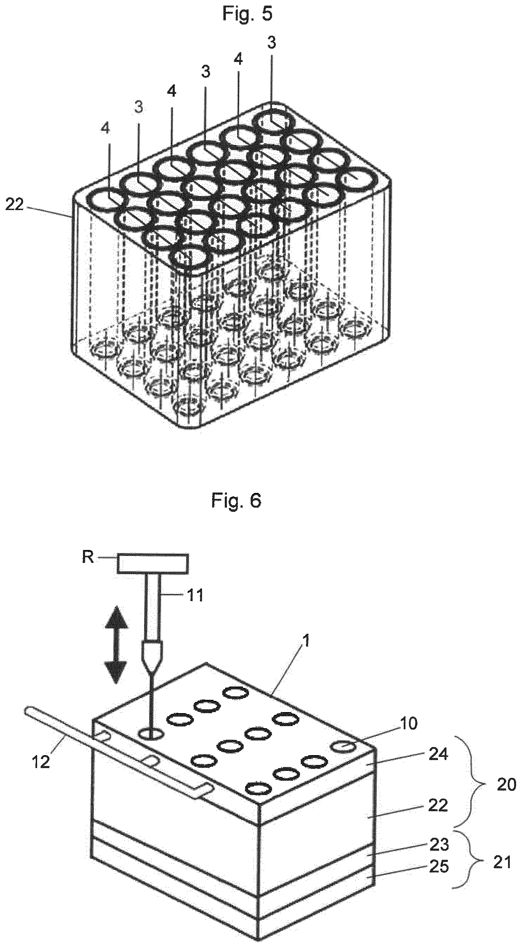

**Figur 5** zeigt eine Behälterplatte 22 des ersten Moduls 20 einer erfindungsgemäßen Filtrationsvorrichtung 1 mit ersten und zweiten Behältern 3, 4 einer Vielzahl von Filtrationseinheiten 2. Die Filtrationseinheiten 2 sind identisch zu der in Figur 1 dargestellten Filtrationsvorrichtung 1 angeordnet, wobei die Behälterplatte 22 jeweils drei Reihen mit jeweils vier ersten Behältern 3 bzw. vier zweiten Behältern 4 aufweist. Die Behälterplatte 22 wird nach dem Anbringen der Filtermedien 6 an die Verbindungsleitungsplatte 23 angeordnet. Die dargestellte Behälterplatte 23 wird in Verbindung mit einer Abdeckplatte 24 verwendet, welche nach dem Befüllen der ersten Behälter 3 der Filtrationseinheiten an der Behälterplatte angeordnet wird und welche die Öffnungen 9, 10 enthält, um die ersten Behälter 3 mit Überdruck zu beaufschlagen und/oder Zugang eines Messinstruments 11 zu den zweiten Behältern 4 zu ermöglichen. Bei dieser bevorzugten Ausführungsform wird deutlich, dass die Behälterplatte 22 mit besonders geringem Aufwand gefertigt werden kann, da die ersten und zweiten Behälter 3, 4 identische Maße besitzen und eine einfache Geometrie aufweisen.

**Figur 6** zeigt eine besonders bevorzugte Ausführungsform der modularen Filtrationsvorrichtung 1 mit einer Verbindungsleitungsplatte 23 und einer Abschlussplatte 25 wie in Figur 4c dargestellt, einer Behälterplatte 22 wie in Figur 5 dargestellt, sowie einer Abdeckplatte 24, welche die Öffnungen 9, 10 der ersten und zweiten Behälter 3, 4 der Filtrationseinheiten 2 aufweist.

Die Modularität der Filtrationsvorrichtung 1 gemäß dieser bevorzugten Ausführungsform ermöglicht neben einem geringen Fertigungsaufwand ein besonders einfaches Zusammenfügen der Filtrationsvorrichtung 1 und die besonders einfache Möglichkeit einer Variation von Filtermedien 6 und/oder Rohmaterialien:
Zunächst werden die verschiedenen Filtermedien 6 an der Verbindungsleitungsplatte 23 angebracht. Optional wurden die Verbindungsleitungen 5 zuvor mit einem Fluid befüllt und/oder ein poröses Trägermaterial angebracht, welches die Filtermedien 6 stützt. Im Anschluss wird die in Figur 5 dargestellte Behälterplatte 22 an die Verbindungsleitungsplatte 23 angeordnet. Durch die besondere Ausgestaltung der Behälterplatte 22 sind sämtliche der ersten und zweiten Behälter 3, 4 der Vielzahl von Filtrationseinheiten 2 von oben zugänglich, sodass die ersten Behälter 3 auf einfache Weise mit demselben oder unterschiedlichen zu filtrierenden Medien 7 befüllt werden können. Optional werden die zweiten Behälter 4 mit kleinen Mengen eines Filtrats 8 befüllt, damit bei einer initialen Füllstandsmessung das Messinstrument 11 nicht durch Anstoßen an die Behälterwand beschädigt wird. Abschließend wird die Abdeckplatte 24 an die Behälterplatte 22 angeordnet. Die Abdeckplatte 24 weist die ersten und zweiten Öffnungen 9, 10 auf. Danach kann die Filtrationsvorrichtung 1 unterhalb des Messinstruments 11 angeordnet werden, wobei ein oder mehrere Messinstrumente 11 über einen (insbesondere als Pipettierroboter ausgeführten) Messroboter R in den jeweiligen zweiten Behälter 4 zumindest teilweise eingeführt werden kann. Hierbei kann vorteilhaft ein Roboter der "Freedom EVO^{®} series" der Firma Tecan Trading AG, Schweiz und/oder ein Roboter Modell "LISSY^{®}" der Firma Zinsser NA, Inc., Northridge (CA), USA zum Einsatz kommen. In der dargestellten Ausführungsform sind die ersten Öffnungen 9 an eine Druckbeaufschlagungs- bzw. Überdruckleitung 12 angeschlossen um mithilfe von Überdruckgas bzw. -fluid die ersten Behälter 3 der Filtrationseinheiten 2 mit Überdruck zu beaufschlagen. Die zweiten Öffnungen 10 ermöglichen das Einführen eines Messinstruments 11 in die zweiten Behälter 4 unter Umgebungsdruck, um Füllstände in dem zweiten Behälter 4 zu ermitteln und optional Filtratproben während des Filtrationsprozesses zu entnehmen. Die Steuerung bzw. Regelung der Verlagerung des Messinstruments 11 und/oder dessen Messvorgänge erfolgt bevorzugt durch den Messroboter R.

### Bezugszeichenliste

- 1: Filtrationsvorrichtung
- 2: Filtrationseinheit
- 3: erster Behälter
- 4: zweiter Behälter
- 5: Verbindungsleitung
- 5a: Eingang Verbindungsleitung
- 5b: Ausgang Verbindungsleitung
- 6: Filtermedium
- 7: zu filtrierendes Medium
- 8: Filtrat
- 9: erste Öffnung
- 10: zweite Öffnung
- 11: Messinstrument
- 12: Überdruckleitung
- 20: erstes Modul
- 21: zweites Modul
- 22: Behälterplatte
- 23: Verbindungsleitungsplatte
- 24: Abdeckplatte
- 25: Abschlussplatte
- R: Messroboter

## Patentansprüche

1. Eine Filtrationsvorrichtung (1) mit einer Vielzahl von Filtrationseinheiten (2), wobei eine Filtrationseinheit (2) jeweils umfasst:
einen ersten Behälter (3), dazu ausgebildet ein zu filtrierendes Medium (7) aufzunehmen,
einen zweiten Behälter (4), dazu ausgebildet ein Filtrat (8) aufzunehmen,
wenigstens eine Verbindungsleitung (5), die den ersten Behälter (3) mit dem zweiten Behälter (4) verbindet, und
ein Filtermedium (6) zwischen dem ersten Behälter (3) und dem zweiten Behälter (3), um das zu filtrierende Medium (7) zu filtrieren;
wobei der erste Behälter (3) dazu ausgebildet ist, mit Überdruck beaufschlagt zu werden,
wobei der zweite Behälter (4) dazu ausgebildet ist, bei Umgebungsdruck ein Messinstrument (11) zu empfangen, und
wobei die wenigstens eine Verbindungsleitung (5) derart verläuft, dass sich die Flussrichtung eines von einem ersten Behälter (3) in einen zweiten Behälter (4) fließenden Mediums ändert.

2. Filtrationsvorrichtung (1) nach einem der vorhergehenden Ansprüche, wobei jede Filtrationseinheit (2) eine Öffnung im oberen Bereich aufweist, durch die ein Messinstrument (11) in den zweiten Behälter (4) eingeführt werden und mit dem darin befindlichen Filtrat (8) in Kontakt treten kann.

3. Filtrationsvorrichtung (1) nach einem der vorhergehenden Ansprüche, wobei die Filtrationsvorrichtung (1) modular aufgebaut ist, und zumindest ein erstes Modul (20) und ein zweites Modul (21) aufweist, wobei das erste Modul (20) den ersten Behälter (3) und den zweiten Behälter (4) einer Vielzahl von Filtrationseinheiten (2) umfasst.

4. Filtrationsvorrichtung (1) nach Anspruch 3, wobei das zweite Modul (21) die wenigstens eine Verbindungsleitung (5) einer Vielzahl von Filtrationseinheiten (2) umfasst.

5. Filtrationsvorrichtung (1) nach Anspruch 3 oder 4, wobei das Filtermedium (6) einer Filtrationseinheit (2) zumindest teilweise zwischen dem ersten Modul (20) und dem zweiten Modul (21) der Filtrationsvorrichtung angebracht ist.

6. Filtrationsvorrichtung (1) nach einem der Ansprüche 3 bis 5, wobei das zweite Modul (21) der Filtrationsvorrichtung ein poröses Trägermaterial umfasst, welches zur mechanischen Unterstützung des Filtermediums (6) dient.

7. Filtrationsvorrichtung (1) nach einem der Ansprüche 3 bis 6, wobei:
das erste Modul (20) eine Behälterplatte (22) mit dem ersten Behälter (3) und dem zweiten Behälter (4) einer Vielzahl von Filtrationseinheiten (2) und ein oder mehrere Öffnungen umfasst, die dazu ausgebildet sind, die ersten Behälter (3) mit Überdruck zu beaufschlagen und/oder Zugang eines Messinstruments (11) zu den zweiten Behältern (4) zu ermöglichen;
das zweite Modul (21) eine Verbindungsleitungsplatte (23) mit einer Vielzahl von Verbindungsleitungen (5) umfasst;
wenigstens ein Filtermedium (6) zwischen der Behälterplatte (22) des ersten Moduls (20) und der Verbindungsleitungsplatte (23) des zweiten Moduls (21) angebracht ist;
wobei das erste Modul (20) bevorzugt an sich modular aufgebaut ist und zusätzlich zu der Behälterplatte (22) eine Abdeckplatte (24) umfasst, welche die Öffnung(en) umfasst.

8. Filtrationsvorrichtung (1) nach Anspruch 7, wobei das zweite Modul (21) der Filtrationsvorrichtung modular aufgebaut ist und zusätzlich zu der Verbindungsleitungsplatte (23) eine Abschlussplatte (25) umfasst, wobei die Abschlussplatte (25) Segmente der Verbindungsleitungen (5) umfassen kann.

9. Verfahren zum Zusammenfügen einer modularen Filtrationsvorrichtung (1) mit einer Vielzahl von Filtrationseinheiten (2) umfassend die Schritte:
Anbringen wenigstens eines Filtermediums (6) zum Filtrieren eines zu filtrierenden Mediums (7) an eine Verbindungsleitungsplatte (23);
Anordnen einer Behälterplatte (22) an der Verbindungsleitungsplatte (23), wobei die Behälterplatte (22) eine Vielzahl von ersten und zweiten Behältern (3, 4) umfasst, wobei jeweils ein erster Behälter (3) und ein zweiter Behälter (4) einer Filtrationseinheit (22) zugehörig sind, wobei der erste Behälter (3) einer Filtrationseinheit (2) dazu ausgebildet ist, ein zu filtrierendes Medium (7) aufzunehmen, und der zweite Behälter (4) einer Filtrationseinheit (2) dazu ausgebildet ist, ein Filtrat (8) aufzunehmen, sodass
sich das wenigstens eine Filtermedium (6) zumindest teilweise zwischen der Verbindungsleitungsplatte (23) und der Behälterplatte (22) befindet; und
die jeweiligen ersten und zweiten Behälter (3, 4) einer Filtrationseinheit (2) durch ein oder mehrere Verbindungsleitungen (5) der Verbindungsplatte (23) verbunden sind, wobei die Verbindungsleitungen (5) derart verlaufen, dass sich die Flussrichtung eines von einem ersten Behälter (3) in einen zweiten Behälter (4) fließenden Mediums ändert,
wobei der erste Behälter (3) einer Filtrationseinheit (2) ausgestaltet ist, um durch eine erste Öffnung (9) mit Überdruck beaufschlagt zu werden, und
wobei der zweite Behälter (4) einer Filtrationseinheit (2) eine zweite Öffnung (10) aufweist, durch die ein Messinstrument (11) bei Umgebungsdruck in dem zweiten Behälter (4) empfangen werden kann.

10. Verfahren nach Anspruch 9, weiter umfassend den Schritt:
Anordnen einer Abdeckplatte (24) an die Behälterplatte (22), wobei die Abdeckplatte (24) die ersten und zweiten Öffnungen (9, 10) der Vielzahl von Filtrationseinheiten (2) umfasst.

11. Verfahren nach Anspruch 9 oder 10, weiter umfassend den Schritt:
Befüllen der Verbindungsleitungen (5) der Verbindungsleitungsplatte (23) mit einem Fluid, vor dem Anbringen des wenigstens einen Filtermediums (6) an die Verbindungsplatte (23).

12. Verfahren nach einem der Ansprüche 9 bis 11, weiter umfassend den Schritt:
Befüllen der ersten Behälter (3) einer Vielzahl von Filtrationseinheiten (2) mit einem zu filtrierenden Medium (7), nach dem Anordnen der Behälterplatte (22) an die Verbindungsleitungsplatte (23).

13. Verfahren zur Charakterisierung eines Filtermediums (6) und/oder zu filtrierenden Mediums (7) umfassend die Schritte:
Anordnen einer Filtrationsvorrichtung (1) mit einer Vielzahl von Filtrationseinheiten (2) an einem Pipettierroboter (R), wobei eine Filtrationseinheit (2) jeweils umfasst:
einen ersten Behälter (3), dazu ausgebildet ein zu filtrierendes Medium (7) aufzunehmen,
einen zweiten Behälter (4), dazu ausgebildet ein Filtrat (8) aufzunehmen,
wenigstens eine Verbindungsleitung (5), die den ersten Behälter (3) mit dem zweiten Behälter (4) verbindet, wobei die wenigstens eine Verbindungsleitung (5) derart verläuft, dass sich die Flussrichtung eines von einem ersten Behälter (3) in einen zweiten Behälter (4) fließenden Mediums ändert, und
ein Filtermedium (6) zwischen dem ersten Behälter (3) und dem zweiten Behälter (3), um das zu filtrierende Medium (7) zu filtrieren;
wobei der erste Behälter (3) dazu ausgebildet ist, mit Überdruck beaufschlagt zu werden, und
wobei der zweite Behälter (4) dazu ausgebildet ist, bei Umgebungsdruck ein Messinstrument (11) zu empfangen;
Beaufschlagen von zumindest einem Teil der ersten Behälter (3) einer Vielzahl von Filtrationseinheiten (2) mit Überdruck, um jeweils das zu filtrierende Medium (7) durch das Filtermedium (6) zu filtrieren und in den entsprechenden zweiten Behälter (4) zu überführen;
Erfassen der Filtrate (8) unter Umgebungsdruck in zumindest einem Teil der zweiten Behälter (4) mittels eines eingeführten Messinstruments (11) vorzugsweise während dem Beaufschlagen von zumindest ein Teil der ersten Behälter (3) mit Überdruck.

14. Verfahren nach Anspruch 13, wobei das Erfassen der Filtrate (8) unter Umgebungsdruck in zumindest einem Teil der zweiten Behälter (4) mittels eines eingeführten Messinstruments (11) kontinuierlich und/oder in regelmäßigen, zeitlichen Abständen, bevorzugt nahezu kontinuierlich, durchgeführt wird.

15. Verfahren nach Anspruch 13 oder 14, weiter umfassend den Schritt:
Erfassen der initialen Füllstände der Filtrate (8) in zumindest einem Teil der zweiten Behälter (4), nach Anordnen der Filtrationsvorrichtung (1) an einem Pipettierroboter (R) und vor Beaufschlagen von zumindest einem Teil der ersten Behälter (3) einer Vielzahl von Filtrationseinheiten (2) mit Überdruck.

## Claims

1. A filtration device (1) having a plurality of filtration units (2), wherein a filtration unit (2) respectively comprises:
a first container (3), configured to receive a medium (7) to be filtered,
a second container (4), configured to receive a filtrate (8),
at least one connection line (5), which connects the first container (3) to the second container (4), and
a filter medium (6) between the first container (3) and the second container (4), in order to filter the medium (7) to be filtered;
wherein the first container (3) is configured to be subjected to positive pressure,
wherein the second container (4) is configured to receive a measuring instrument (11) in the event of ambient pressure, and
wherein the at least one connection line (5) extends such that the flow direction of a medium flowing from a first container (3) to a second container (4) changes.

2. The filtration device (1) according to the foregoing claim, wherein each filtration unit (2) has an opening in the upper region, through which a measuring instrument (11) can be introduced into the second container (4) and enter into contact with the filtrate (8) located therein.

3. The filtration device (1) according to any of the foregoing claims, wherein the filtration device (1) is modular and has at least a first module (20) and a second module (21), wherein the first module (20) comprises the first container (3) and the second module (21) of a plurality of filtration units (2) .

4. The filtration device (1) according to claim 3, wherein the second module (21) comprises the at least one connection line (5) of a plurality of filtration units (2).

5. The filtration device (1) according to claim 3 or 4, wherein the filter medium (6) of a filtration unit (2) is attached at least partially between the first module (20) and the second module (21) of the filtration device.

6. The filtration device (1) according to any of claims 3 to 5, wherein the second module (21) of the filtration device comprises a porous carrier material, which mechanically supports the filter medium (6).

7. The filtration device (1) according to any of claims 3 to 6, wherein:
the first module (20) comprises a container plate (22) having the first container (3) and the second container (4) of a plurality of filtration units (2) and one or a plurality of openings, which are configured to subject the first containers (3) to positive pressure and/or to facilitate access of a measuring instrument (11) to the second containers (4);
the second module (21) comprises a connection line plate (23) having a plurality of connection lines (5);
at least one filter medium (6) is attached between the container plate (22) of the first module (20) and the connection line plate (23) of the second module (21);
wherein the first module (20) preferably is inherently modular and in addition to the container plate (22) comprises a cover plate (24), which comprises the opening(s).

8. The filtration device (1) according to claim 7, wherein the second module (21) of the filtration device is modular and in addition to the connection line plate (23) comprises an end plate (25), wherein the end plate (25) can comprise segments of the connection lines (5).

9. A method for joining a modular filtration device (1) to a plurality of filtration units (2) comprising the steps:
attaching at least one filter medium (6) for filtering a medium (7) to be filtered to a connection line plate (23);
arranging a container plate (22) on the connection line plate (23), wherein the container plate (22) comprises a plurality of first and second containers (3, 4),
wherein in each case a first container (3) and a second container (4) are associated with a filtration unit (2), wherein the first container (3) of a filtration unit (2) is configured to receive a medium (7) to be filtered and the second container (4) of a filtration unit (2) is configured to receive a filtrate (8), so that
the at least one filter medium (6) is located at least partially between the connection line plate (23) and the container plate (22); and
the respective first and second containers (3, 4) of a filtration unit (2) are connected by one or a plurality of connection lines (5) of the connection plate (23), wherein the connection lines (5) extend such that the flow direction of a medium flowing from a first container (3) to a second container (4) changes,
wherein the first container (3) of a filtration unit (2) is designed to be subjected to positive pressure through a first opening (9), and
wherein the second container (4) of a filtration unit (2) has a second opening (10), through which a measuring instrument (11) can be received in the second container (4) in the event of ambient pressure.

10. The method according to claim 9, further comprising the step:
arranging a cover plate (24) on the container plate (22), wherein the cover plate (24) comprises the first and second openings (9, 10) of the plurality of filtration units (2).

11. The method according to claim 9 or 10, further comprising the step:
filling the connection lines (5) of the connection line plate (23) with a fluid, prior to attaching the at least one filter medium (6) to the connection plate (23).

12. The method according to any of claims 9 to 11, further comprising the step:
filling the first container (3) of a plurality of filtration units (2) with a medium (7) to be filtered, after the arrangement of the container plate (22) on the connection line plate (23).

13. A method for characterizing a filter medium (6) and/or the medium to be filtered (7) comprising the steps:
arranging a filtration device (1) having a plurality of filtration units (2) on a pipetting robot (R), wherein a filtration unit (2) respectively comprises:
a first container (3), configured to receive a medium (7) to be filtered,
a second container (4), configured to receive a filtrate (8),
at least one connection line (5), which connects the first container (3) to the second container (4), wherein the at least one connection line (5) extends such that the flow direction of a medium flowing from a first container (3) to a second container (4) changes, and
a filter medium (6) between the first container (3) and the second container (4), in order to filter the medium (7) to be filtered;
wherein the first container (3) is configured to be subjected to positive pressure, and
wherein the second container (4) is configured to receive a measuring instrument (11) in the event of ambient pressure;
subjecting at least a portion of the first container (3) of a plurality of filtration units (2) to positive pressure, in order in each case to filter the medium (7) to be filtered through the filter medium (6) and transferred to the corresponding second container (4);
measuring the filtrate (8) under ambient pressure in at least a portion of the second container (4) by means of an introduced measuring instrument (11) preferably while subjecting at least a portion of the first container (3) to positive pressure.

14. The method according to claim 13, wherein the measurement of the filtrates (8) is carried out under ambient pressure in at least a portion of the second container (4) by means of an introduced measuring instrument (11) continuously and/or at regular intervals, preferably virtually continuously.

15. The method according to claim 13 or 14, further comprising the step:
measuring the initial fill levels of the filtrates (8) in at least a portion of the second container (4), after arranging the filtration device (1) on a pipetting robot (R) and prior to subjecting at least a portion of the first container (3) of a plurality of filtration units (2) to positive pressure.

## Revendications

1. Dispositif de filtration (1) avec une pluralité d'unités de filtration (2), dans lequel une unité de filtration (2) comprend respectivement :
un premier récipient (3) conçu pour accueillir un milieu à filtrer (7),
un second récipient (4) conçu pour accueillir un filtrat (8),
au moins une conduite de liaison (5) qui relie le premier récipient (3) au second récipient (4), et
un milieu filtrant (6) entre le premier récipient (3) et le second récipient (4) pour filtrer le milieu à filtrer (7);
dans lequel le premier récipient (3) est conçu pour être sollicité avec une surpression,
dans lequel le second récipient (4) est conçu pour, à pression ambiante, recevoir un instrument de mesure (11), et
dans lequel la au moins une conduite de liaison (5) se déroule de sorte que la direction d'écoulement d'un milieu s'écoulant depuis un premier récipient (3) jusque dans un second récipient (4) se modifie.

2. Dispositif de filtration (1) selon la revendication précédente, dans lequel chaque unité de filtration (2) présente une ouverture dans la région supérieure, à travers laquelle un instrument de mesure (11) peut être introduit dans le second récipient (4) et entrer en contact avec le filtrat (8) qui s'y trouve.

3. Dispositif de filtration (1) selon l'une des revendications précédentes, dans lequel le dispositif de filtration (1) est bâti de façon modulaire et présente au moins un premier module (20) et un second module (21), dans lequel le premier module (20) comprend le premier récipient (3) et le second récipient (4) d'une pluralité d'unités de filtration (2).

4. Dispositif de filtration (1) selon la revendication 3, dans lequel le second module (21) comprend la au moins une conduite de liaison (5) d'une pluralité d'unités de filtration (2).

5. Dispositif de filtration (1) selon la revendication 3 ou 4, dans lequel le milieu filtrant (6) d'une unité de filtration (2) est apporté au moins partiellement entre le premier module (20) et le second module (21) du dispositif de filtration.

6. Dispositif de filtration (1) selon l'une des revendications 3 à 5, dans lequel le second module (21) du dispositif de filtration comprend un matériau support poreux, lequel sert de soutien mécanique au milieu filtrant (6).

7. Dispositif de filtration (1) selon l'une des revendications 3 à 6, dans lequel :
le premier module (20) comprend un plateau de récipient (22) avec le premier récipient (3) et le second récipient (4) d'une pluralité d'unités de filtration (2) et une ou plusieurs ouvertures qui sont conçues pour solliciter les premiers récipients (3) avec une surpression et/ou permettre l'accès d'un instrument de mesure (11) vers les seconds récipients (4);
le second module (21) comprend un plateau de conduite de liaison (23) avec une pluralité de conduites de liaison (5);
au moins un milieu filtrant (6) est apporté entre le plateau de récipient (22) du premier module (20) et le plateau de conduite de liaison (23) du second module (21);
dans lequel le premier module (20) est de préférence en soi bâti de façon modulaire et comprend en complément du plateau de récipient (22) un plateau de recouvrement (24), lequel comprend la/les ouverture(s).

8. Dispositif de filtration (1) selon la revendication 7, dans lequel le second module (21) du dispositif de filtration est bâti de façon modulaire et comprend en complément du plateau de conduite de liaison (23) un plateau de fermeture (25), dans lequel le plateau de fermeture (25) peut comprendre des segments des conduites de liaison (5).

9. Procédé d'assemblage d'un dispositif de filtration (1) modulaire avec une pluralité d'unités de filtration (2) comprenant les étapes :
apport d'au moins un milieu filtrant (6) pour filtrer un milieu à filtrer (7) contre un plateau de conduite de liaison (23);
agencement d'un plateau de récipient (22) contre le plateau de conduite de liaison (23), dans lequel le plateau de récipient (22) comprend une pluralité de premiers et seconds récipients (3, 4), dans lequel respectivement un premier récipient (3) et un second récipient (4) appartiennent à une unité de filtration (2), dans lequel le premier récipient (3) d'une unité de filtration (2) est conçu pour accueillir un milieu à filtrer (7), et le second récipient (4) d'une unité de filtration (2) est conçu pour accueillir un filtrat (8), de sorte que
le au moins un milieu filtrant (6) se trouve au moins partiellement entre le plateau de conduite de liaison (23) et le plateau de récipient (22); et
les premiers et seconds récipients (3, 4) respectifs d'une unité de filtration (2) sont reliés par une ou plusieurs conduites de liaison (5) du plateau de conduite de liaison (23), dans lequel les conduites de liaison (5) se déroulent de sorte que la direction d'écoulement d'un milieu s'écoulant depuis un premier récipient (3) jusque dans un second récipient (4) se modifie,
dans lequel le premier récipient (3) d'une unité de filtration (2) est aménagé pour être sollicité avec une surpression à travers une première ouverture (9), et
dans lequel le second récipient (4) d'une unité de filtration (2) présente une seconde ouverture (10) à travers laquelle un instrument de mesure (11) peut, à pression ambiante, être reçu dans le second récipient (4).

10. Procédé selon la revendication 9, comprenant en outre l'étape :
agencement d'un plateau de recouvrement (24) contre le plateau de récipient (22), dans lequel le plateau de recouvrement (24) comprend les premières et secondes ouvertures (9, 10) de la pluralité d'unités de filtration (2).

11. Procédé selon la revendication 9 ou 10, comprenant en outre l'étape :
remplissage des conduites de liaison (5) du plateau de conduite de liaison (23) avec un fluide, avant l'apport du au moins un milieu filtrant (6) contre le plateau de conduite de liaison (23).

12. Procédé selon l'une des revendications 9 à 11, comprenant en outre l'étape :
remplissage du premier récipient (3) d'une pluralité d'unités de filtration (2) avec un milieu à filtrer (7), après l'agencement du plateau de récipient (22) contre le plateau de conduite de liaison (23).

13. Procédé de caractérisation d'un milieu filtrant (6) et/ou d'un milieu à filtrer (7) comprenant les étapes :
agencement d'un dispositif de filtration (1) avec une pluralité d'unités de filtration (2) contre un robot de pipetage (R), dans lequel une unité de filtration (2) comprend respectivement :
un premier récipient (3) conçu pour accueillir un milieu à filtrer (7),
un second récipient (4) conçu pour accueillir un filtrat (8),
au moins une conduite de liaison (5) qui relie le premier récipient (3) au second récipient (4), dans lequel la au moins une conduite de liaison (5) se déroule de sorte que la direction d'écoulement d'un milieu s'écoulant depuis un premier récipient (3) jusque dans un second récipient (4) se modifie, et
un milieu filtrant (6) entre le premier récipient (3) et le second récipient (4) pour filtrer le milieu à filtrer (7);
dans lequel le premier récipient (3) est conçu pour être sollicité avec une surpression, et
dans lequel le second récipient (4) est conçu pour, à pression ambiante, recevoir un instrument de mesure (11);
sollicitation d'au moins une partie des premiers récipients (3) d'une pluralité d'unités de filtration (2) avec une surpression, pour respectivement filtrer le milieu à filtrer (7) par le milieu filtrant (6) et le transférer dans les seconds récipients (4) correspondants;
saisie des filtrats (8) à pression ambiante dans au moins une partie des seconds récipients (4) au moyen d'un instrument de mesure (11) qui est introduit, de préférence pendant la sollicitation d'au moins une partie des premiers récipients (3) avec une surpression.

14. Procédé selon la revendication 13, dans lequel la saisie des filtrats (8) à pression ambiante dans au moins une partie des seconds récipients (4) au moyen d'un instrument de mesure (11) qui est introduit est exécutée en continu et/ou à des intervalles de temps réguliers, de préférence presque en continu.

15. Procédé selon la revendication 13 ou 14, comprenant en outre l'étape :
saisie des niveaux de remplissage initiaux des filtrats (8) dans au moins une partie des seconds récipients (4), après agencement du dispositif de filtration (1) contre un robot de pipetage (R) et avant sollicitation d'au moins une partie des premiers récipients (3) d'une pluralité d'unités de filtration (2) avec une surpression.
